# FASCICULE DE BREVET EUROPEEN

(11) **EP 2 411 648 B1**
(45) Date de publication et mention de la délivrance du brevet: **13.07.2016**
(21) Numéro de dépôt: 10708339.6
(22) Date de dépôt: 12.02.2010
(51) Int. Cl.: F02D 41/00, F01N 3/08, F01N 3/023, F01N 13/02, F02D 41/40, F02D 41/02, F02D 23/02, F02D 41/38

(54) **PROCEDE DE CONTROLE DES EMISSIONS POLLUANTES D'UN MOTEUR A COMBUSTION**
VERFAHREN ZUR ÜBERWACHUNG VON SCHADSTOFFEMISSIONEN EINES VERBRENNUNGSMOTORS
METHOD FOR MONITORING POLLUTANT EMISSIONS OF A COMBUSTION ENGINE

(30) Priorité: 24.03.2009 FR 0951856
(43) Date de publication de la demande: 01.02.2012
(73) Titulaire: Peugeot Citroën Automobiles Société Anonyme, 78140 Vélizy Villacoublay (FR)
(72) Inventeur: CHARIAL, Christophe, 78000 VERSAILLES (FR); MAESSE, Pierre-Henri, F-92500 Rueil Malmaison (FR); AUDOUIN, Arnaud, F-75018 Paris (FR)
(74) Mandataire: Renous Chan, Véronique
(86) Numéro de dépôt international: PCT/FR2010/050242
(87) Numéro de publication internationale: WO 2010/109101

(56) Documents cités:
- EP-A1- 1 321 643
- EP-A1- 1 837 496
- EP-A2- 0 806 553
- EP-B1- 0 784 738
- US-A1- 2005 039 439
- US-A1- 2008 202 101
- BRUENE H-J ET AL: "Diesel-Emissionstechniken von BMW fuer kuenftige weltweite Abgasnormen" MTZ MOTORTECHNISCHE ZEITSCHRIFT, VIEWEG VERLAG, WIESBADEN, DE, vol. 70, no. 3, 1 mars 2009 (2009-03-01), pages 210-216, XP001519594 ISSN: 0024-8525
- LAMPING M ET AL: "Zusammenhang zwischen Schadstoffreduktion und Verbrauch bei Pkw-Dieselmotoren mit Direkteinspritzung" MTZ MOTORTECHNISCHE ZEITSCHRIFT, VIEWEG VERLAG, WIESBADEN, DE, vol. 68, no. 1, 1 janvier 2007 (2007-01-01), pages 50-57, XP001519891 ISSN: 0024-8525
- John B Heywood: "INTERNAL COMBUSTION ENGINE FUNDAMENTALS, PASSAGE" In: "MCGRAW-HILL SERIES IN MECHANICAL ENGINEERING", 1 January 1988 (1988-01-01), New York, US, XP055196366, pages 863-866,

## Description

La présente invention concerne un procédé de contrôle des émissions polluantes d'un moteur à combustion.

L'utilisation de combustible fossile comme le pétrole ou le charbon dans un système de combustion, en particulier le carburant dans un moteur, entraine la production en quantité non négligeable de polluants qui peuvent être déchargés par l'échappement dans l'environnement et y causer des dégâts. Parmi ces polluants, les oxydes d'azote (appelés NOx) posent un problème particulier puisque ces gaz sont soupçonnés d'être un des facteurs qui contribuent à la formation des pluies acides et à la déforestation. En outre, les NOx sont liés à des problèmes de santé pour les humains et sont un élément clé de la formation de « smog » (nuage de pollution) dans les villes. La législation impose des niveaux de rigueur croissante pour leur réduction et/ou leur élimination de sources fixes ou mobiles.

Parmi les polluants que les législations tendent à réglementer de façon de plus en plus stricte figurent également les suies ou autres matériaux particulaires résultant essentiellement d'une combustion incomplète du carburant, plus particulièrement lorsque le moteur est opéré en mélange dit pauvre, c'est-à-dire avec un excédent d'oxygène (d'air) par rapport à la stoechiométrie de la réaction de combustion. Les mélanges pauvres sont de règle pour les moteurs dits diesel, dont l'allumage est obtenu par compression.

Pour ces deux grandes catégories de polluants, différents moyens de dépollution et stratégies de combustion sont mis en oeuvre.

Pour limiter les émissions de particules, la technologie des filtres à particules se généralise peu à peu pour tous les véhicules équipés d'un moteur diesel. Cette technologie consiste essentiellement à forcer le passage des gaz d'échappement à travers des canaux poreux d'une structure nid d'abeille en céramique. Les suies ainsi filtrées s'accumulent puis sont éliminées dans une opération de régénération du filtre pendant laquelle elles sont brûlées. Pour obtenir cette régénération, il est toutefois nécessaire d'augmenter la température des gaz d'échappement, ce qui est typiquement obtenu en enrichissant ceux-ci avec du carburant (injecté directement dans la ligne d'échappement ou dans la chambre de combustion du moteur, pendant la phase d'échappement du cycle de combustion) et/ou en augmentant la charge du moteur. Par ailleurs, un agent catalytique est utilisé pour faciliter la combustion des suies, cet agent étant soit déposé de façon permanente dans les canaux du filtre, soit introduit comme additif avec le carburant, cette dernière technologie permettant d'opérer avec des températures de combustion plus basses que celles requises avec des filtres catalysés.

Pour limiter les émissions de NOx, la principale voie mise en oeuvre sur les véhicules actuels a été celle de la réduction des émissions à la source, autrement dit, en opérant le moteur dans des conditions telles que les taux de NOx produits soient inférieurs aux taux limites. Ces conditions sont réunies notamment en pilotant de manière très fine les différents paramètres du moteur, à commencer par les paramètres d'injection de carburant et de réinjection à l'admission d'une partie des gaz d'échappement, ceci afin de réduire la concentration en oxygène favorable à la formation des oxydes d'azote.

Les niveaux d'émission tolérés tendant à se sévériser, une autre solution consiste à utiliser des solutions de post-traitement, en introduisant un agent réducteur dans la ligne d'échappement. Ainsi, une solution de post-traitement ayant fait la preuve de son efficacité est l'utilisation d'une source d'ammoniac (NH₃), telle que l'urée aqueuse. L'ammoniac réagit avec les NOₓ sur un catalyseur pour former de l'azote N₂ inerte et de l'eau H₂O. Cette solution est essentiellement connue sous le nom de son acronyme anglais SCR pour « Selective Catalytic Reduction ».

Pour traiter à la fois les NOx et les particules, la ligne d'échappement doit être pourvue des deux équipements de post-traitement, un catalyseur SCR (S) et un filtre à particules (F). Par ailleurs, ce dernier nécessite un catalyseur d'oxydation (C) placé en amont du filtre. Donc, d'amont en aval dans le sens des gaz d'échappement, on peut avoir quatre architectures types : SCF, CSF connu par exemple du document EP0806553, CFS et CSF.

Dans la demande de brevet WO 2007/132102, on a montré les avantages d'une architecture de type CSF, associée à un superviseur modulant lors des phases de régénération du filtre à particules, les injections d'urée et de carburant pour compenser les pertes thermiques des gaz d'échappement dans le catalyseur, et ainsi, éviter que les gaz n'arrivent refroidis dans le filtre à particules.

Dans ce texte, il est simplement indiqué que le filtre à particules peut être d'un type connu en lui-même. Or, comme indiqué précédemment, il existe essentiellement deux grands types de filtre à particules, les filtres dits par abus de langage non-additivés (pour préciser que le carburant n'est pas additivé, les parois du filtre étant muni d'un revêtement catalytique) ou les filtres additivés.

Les auteurs de la présente invention ont trouvé que l'utilisation d'un filtre additivé était tout spécialement avantageuse si elle est combinée avec une stratégie d'injection de carburant judicieusement choisie.

Plus précisément, l'invention a pour objet un procédé de contrôle des émissions de polluants par un moteur à combustion comportant au moins un piston dont le déplacement en translation délimite une chambre de combustion, ledit moteur étant associé à une ligne d'échappement comportant, dans le sens d'écoulement des gaz d'échappement, un catalyseur d'oxydation, un catalyseur de réduction des NOx et un filtre à particules, caractérisé par l'utilisation d'un carburant comportant un additif favorisant la combustion des suies lors des régénérations du filtre à particules, et qui selon au moins un mode de fonctionnement du moteur, est injecté conformément à une calibration mise en oeuvre selon un seuil prédéfini correspondant à un état d'efficacité donné des moyens de post-traitement, cette calibration minimisant les rejets de dioxyde de carbone par le moteur, en procédant à une injection principale de carburant débutant entre 20° et 0° vilebrequin avant le point mort haut, quel que soit le couple régime, pression moyenne effective du moteur, donc y compris dans la zone dite « pollution », correspondant à un régime faible et pression moyenne effective sur le piston faible à moyenne.

Typiquement cette injection principale de carburant débute entre 12° et 0° dans la zone « pollution ». Il doit être souligné que selon les moteurs diesel de l'art, les injections principales sont opérées après le point mort haut, par exemple entre 0° et 10° vilebrequin dans cette zone pollution.

Avantageusement, cette injection principale est précédée d'une injection pilote, opérée de préférence de 2 à 10 degrés vilebrequin avant le début de l'injection principale.

En d'autres termes, selon l'invention, l'injection principale de carburant est effectuée au moment où la compression de l'air est maximale, dans des conditions qui favorisent le rendement énergétique du moteur, autrement dit des conditions qui permettent un gain de consommation de carburant et donc de minimiser la quantité de CO₂ produite.

Ces conditions sont normalement écartées par l'homme de l'art car elles s'accompagnent d'une production fortement accrue de NOx, compensée selon l'invention par une disposition du catalyseur de réduction des NOx en amont du filtre à particules.

Dans une variante préférée de l'invention, le mode de fonctionnement du moteur minimisant la production de CO₂ est mis en oeuvre dès que les moyens de réduction des NOx sont actifs.

Dans une variante, l'injection de carburant est opérée d'une manière telle que le mélange carburant/comburant a une richesse voisine de 0,7, et plus généralement comprise entre 0,6 et 0,8.

Dans une variante, le catalyseur de réduction des NOx et le filtre à particules sont accolés. Ainsi, on évite toute perturbation du flux gazeux entre les deux moyens principaux de post-traitement.

Dans une variante, le catalyseur d'oxydation est imprégné de platine et de palladium, de préférence dans un rapport molaire platine/palladium variant de 2 pour 1 à 4 pour 1. Ce rapport atypique (un catalyseur d'oxydation conventionnel comportant normalement que du platine) permet de stabiliser le rapport molaire NO₂/NOₓ dans les gaz d'échappement, et par conséquent d'améliorer les performances du catalyseur SCR.

Dans une variante, l'injection d'un agent réducteur des NOx est opérée entre le catalyseur d'oxydation et le catalyseur de réduction des NOx.

D'autres détails et caractéristiques avantageuses de l'invention ressortent de la description détaillée faite ci-après en référence aux figures annexées qui montrent :
- Figure 1 : une vue schématique d'un moteur et de sa ligne de traitement des gaz d'échappement ;
- Figure 2 : un schéma illustrant le principe du décalage des injections proposées selon l'invention, visant à minimiser la production de CO₂ et non de NOx comme selon l'art antérieur ;
- Figure 3 : un schéma montrant de manière adimensionnée les relations entre la production de CO₂ et celle de NOx, en sortie d'un moteur diesel ;
- Figure 4 : un graphe illustrant la température des gaz d'échappement en différents points de la ligne d'échappement, dans l'hypothèse d'un roulage à une vitesse moyenne inférieure à 20km/h.
- Figure 5 : un graphe comparatif montrant les émissions cumulées de NOx sur un parcours de roulage standardisé, dans différentes hypothèses de calibration moteur, et avec ou non un post-traitement par un catalyseur SCR.
- Figure 6 : un graphe illustrant l'évolution de la pression moyenne effective (PME) en fonction du régime moteur et l'emplacement de la zone dite « pollution ».

On précise pour la suite de la description que, sauf indication contraire, dans les fourchettes de valeurs qui sont données, les valeurs aux bornes sont incluses.

Par oxydes d'azote NOx on entend notamment les oxydes du type protoxyde N₂O, sesquioxyde N₂O₃, pentoxyde N₂O₅, monoxyde NO et dioxyde NO₂.

Dans le contexte des normes applicables pour les moteurs diesel commercialisés en Europe, les niveaux d'émissions de polluants tolérés sont les suivants :

| Norme | *CO* | *NOx* | *HC* + *NOx* |
|---|---|---|---|
| EURO4 mg/km | 500 | 250 | 300 |
| EURO5 mg/km | 500 | 180 | 230 |
| EURO6 mg/km | 500 | 80 | 170 |

Donc selon la norme Euro6, applicable en 2014, les niveaux tolérés pour les émissions d'oxydes seront notamment divisées par 2,25 par rapport à leur niveau Euro5, applicable fin 2009.

En pratique, les constructeurs ont démontré que les normes Euro5, en ce qu'elles concernent les oxydes d'azote, peuvent être satisfaites pour les moteurs de petites ou moyennes cylindrées par une réduction des émissions à la source par optimisation de la géométrie de la chambre de combustion l'intégration de divers composants sur le moteur, comme par exemple un EGR basse pression et une calibration très fine du moteur.

Pour des moteurs plus puissants, ou pour satisfaire des normes encore plus sévères, on prévoit des moyens de post-traitement spécifiques comme un catalyseur de SCR (ou « Selective Catalytic Reduction ») qui permet de réduire les NOx par l'ajout d'un réducteur. Le réducteur classiquement utilisé est l'ammoniac (NH₃), obtenu par thermolyse/ hydrolyse de l'urée dans la ligne d'échappement selon les réactions suivantes :

(NH₂)₂CO → HNCO + NH₃ : thermolyse à 120°C

HNCO + H2O → CO₂ + NH₃ : hydrolyse à 180°C

Le catalyseur SCR sert à favoriser la réduction des NOx par NH₃ selon les 3 réactions suivantes:

4NH₃ + 4NO + O₂ → 4N₂ + 6H₂O

2NH₃ + NO + NO₂ → 2N₂ + 3H₂O

8NH₃ + 6NO₂ → 7N₂ + 12H₂O

Toutefois le catalyseur SCR n'est efficace que sur une plage de températures comprises entre environ 180°C et 500°C, ce qui exclut certaines conditions de fonctionnement des moteurs et donc limite l'efficacité de conversion qui peut être atteinte par le principe de la SCR.

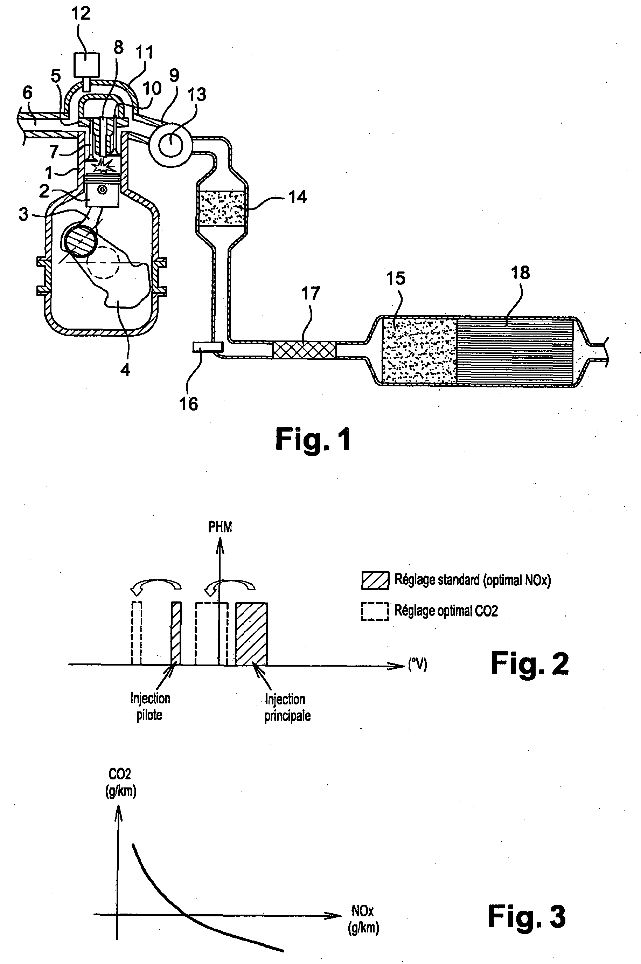

La figure 1 est un schéma de principe d'un moteur thermique tel qu'un moteur diesel selon l'invention. Le moteur comprend au moins un piston 1, qui se déplace en translation dans un cylindre 2, et dont le mouvement alternatif en translation est transmis par une bielle 3 à un vilebrequin 4

Le cylindre 2 délimite avec le piston 1 et une culasse 5 une chambre de combustion dans laquelle de l'air frais est amené via une conduite 6, et admis dans la chambre suivant la position d'une soupape d'admission 7. Du carburant, par exemple du gazole ou un biocarburant tel un diester est introduit dans la chambre de combustion par un injecteur 8. Le mélange est comprimé à une pression suffisamment élevée pour permettre l'auto-inflammation du mélange air-carburant et les gaz de combustion sont évacués par un conduit d'échappement 9, dont l'ouverture est commandée par une soupape d'échappement 10 qui débouche dans un collecteur d'échappement. De ce collecteur, il est prévu une conduite 11 pour la recirculation d'une partie des gaz d'échappement, une vanne dit vanne EGR 12 permettant de contrôler le débit de gaz d'échappement réintroduit à l'admission.

La ligne d'échappement ici illustrée comporte, dans le sens de circulation des gaz, par exemple une turbine 13, entrainée par les gaz d'échappement et dont l'arbre entraine par exemple un compresseur placé dans la ligne d'admission des gaz frais (ici non représenté). Les gaz d'échappement passent ensuite dans un catalyseur d'oxydation 14 dont le rôle premier est d'oxyder en dioxyde de carbone le monoxyde de carbone contenu dans les gaz en sortie de moteur.

En aval du catalyseur d'oxydation 14, les gaz d'échappement traversent un catalyseur de traitement des NOx 15. Dans le cas de la figure 1, ce catalyseur est un catalyseur SCR, ce qui suppose des moyens d'injections d'un agent réducteur tel que de l'urée (injecteur 16). Selon les cas, on peut également prévoir un mélangeur statique 17 entre l'injecteur 16 et le catalyseur SCR 15. En aval de ce catalyseur 11 est disposé un piège à particules 18 de préférence accolé au catalyseur 15.

Comme illustré à la figure 1, si ce catalyseur SCR est disposé en amont du filtre à particules dans la ligne d'échappement, ces températures peuvent être assez facilement atteintes et alors ce catalyseur peut être capable de traiter très efficacement des quantités de NOx sans commune mesure avec les quantités de NOx conventionnelles.

Or, depuis de nombreuses années, les motoristes ont développé des stratégies d'injection du carburant visant à minimiser la production des NOx. Comme illustré à la figure 2, en pointillés, ces stratégies consistent notamment à opérer une injection en deux temps, avec une injection pilote précédant le point mort haut et une injection principale postérieure à ce point mort haut.

Si maintenant, conformément à l'invention, l'injection principale est avancée pour débuter avant le point mort haut (l'injection pilote étant de préférence maintenue mais de même décalée), on augmente le rendement de la combustion, et donc la quantité de CO₂ produite. Ce gain est obtenu toutefois au prix d'une très forte augmentation des NOx, de l'ordre de 200 à 250%, détérioration qui apparaît donc comme totalement rédhibitoire selon les pratiques de l'art. Le graphe de la figure 3 montre en effet que les gains en CO₂ entrainent une dégradation des NOx et inversement.

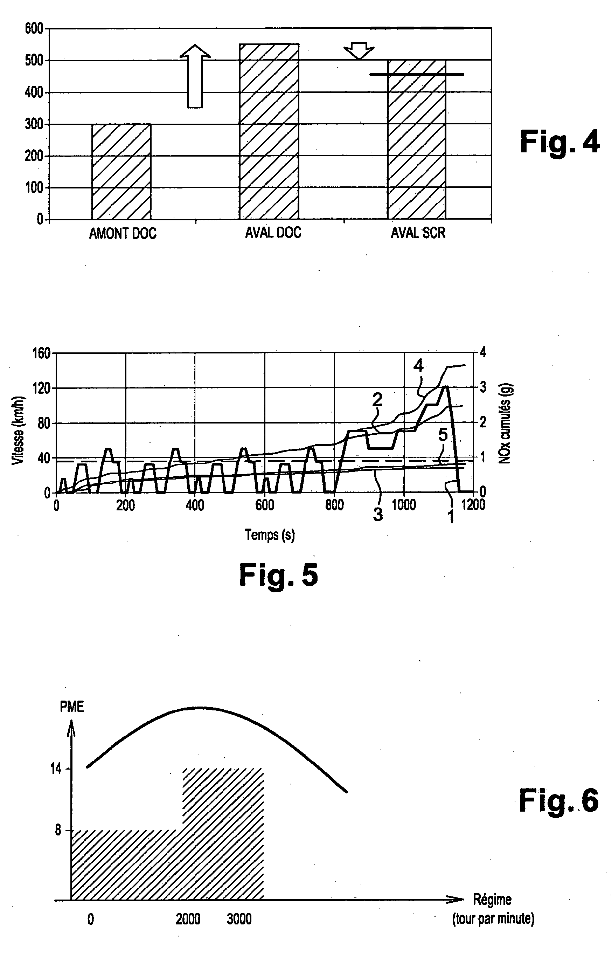

A la figure 6, on a de plus représenté l'allure de l'évolution de la pression moyenne effective (PME) en fonction du régime moteur pour un moteur diesel conventionnel. Sur cette figure, on a de plus hachuré la zone dite « pollution », qui dans ce cas, correspond à un régime compris entre 0 et 3000 tours minute, et une PME comprise entre 0 et 14. Dans cette zone hachurée, à fort risque de production de NOx, on utilise normalement un réglage tel que l'injection principale débute après le point mort haut. Selon l'invention, pour tous les points de fonctionnement du moteur, le réglage est tel que l'injection principale débute avant le point mort haut.

En fait, cette très forte dégradation du point de vue des NOx produits est liée à une augmentation de la température dans la chambre de combustion. Ce phénomène est bien connu, et de façon classique, contrebalancé par une réintroduction à l'admission d'une partie des gaz d'échappement afin de diluer la masse des gaz réactifs et minimiser la température dans la chambre de combustion.

Paradoxalement, cette augmentation de la température dans la chambre de combustion, source d'une production accrue de NOx, a aussi pour conséquence une augmentation de la température des gaz d'échappement, de sorte que le catalyseur SCR est dans une plage de température garantissant son fonctionnement optimal.

Par ailleurs, même si le catalyseur SCR placé en amont du filtre à particules absorbe de la chaleur, ce qui diminue la température en entrée de ce filtre, cette température reste suffisamment élevée pour permettre la régénération du filtre additivé.

On a illustré à la figure 4 des conditions de régénération FAP avec injection complémentaire de carburant, à partir d'essais réalisés en simulant une circulation en ville, à une vitesse moyenne inférieure à 20km/heure, avec une calibration optimisée CO₂, c'est-à-dire dans des conditions très défavorables à la régénération d'un filtre à particules mais pour lesquelles une régénération doit néanmoins être possible si le véhicule est à usage purement urbain par exemple. Comme on peut le voir, les gaz d'échappement en entrée du catalyseur d'oxydation (donc juste après le passage au travers de la turbine si le moteur est muni d'un turbocompresseur), ont une température de par exemple 250°C. En sortie d'un catalyseur selon l'invention (c'est-à-dire avec un ratio molaire platine/palladium de 2/1), la température est augmentée de 200°C. Dans le catalyseur SCR, les déperditions thermiques font que la température n'est plus que de 350°C, c'est-à-dire une température inférieure à la température d'amorçage nécessaire pour une régénération dans le cas d'un filtre non additivé, mais bien supérieure à celle dans le cas d'un filtre additivé.

Comme indiqué précédemment, le réglage moteur préconisé selon l'invention, avec une injection principale du carburant centrée autour du point mort, conduit à une forte augmentation de la production des NOx en sortie de moteur. Le graphe de la figure 5 montre que néanmoins, le taux d'émission de NOx du véhicule peut être parfaitement contrôlé.

Sur cette figure 5, on a représenté un parcours de roulage standardisé de 20 minutes (1200s), en imposant des vitesses 1 (axe des ordonnées à gauche de la figure). Ce parcours correspond au cycle d'homologation européen MVEG.

Sur ce même graphe, en se référant à l'axe des ordonnées à droite de la figure), on a également indiqué les émissions de NOx, en gramme, cumulées sur tout le parcours.

En 2, on a représenté les émissions obtenues dans l'hypothèse d'un moteur dont la calibration est, conformément à l'art antérieur, optimisée NOx, afin de satisfaire la norme d'émission Euro5. A la fin du parcours, on a ainsi émis environ 2,5g de NOx.

Si maintenant on équipe le même moteur d'un catalyseur SCR, les émissions sont ramenées sous les 1 g (courbe 3), soit en deçà de la limite prévue pour la norme Euro6, indiqué par un trait discontinue, et légèrement inférieure à 1 g. Par ailleurs on note une efficacité de réduction des NOx très élevée sur la fin du cycle (>90%) en raison notamment des fortes températures échappement.

En reprenant le même moteur, avec un véhicule sans moyen de post-traitement NOx, et en adoptant une calibration selon l'invention, optimisée CO₂ qui peut être activée à n'importe quel moment (dans le cas ici illustré à 800s), comme le montre la courbe 4, les émissions cumulées de NOx s'écartent très rapidement du cas standard, et atteignent en fin de parcours un niveau supérieur à 3,5g (alors même que cette calibration optimisée n'est mise en oeuvre que dans le dernier tiers du parcours, une fois que l'ensemble des équipements de dépollution sont bien opérationnels).

Si maintenant, conformément à l'invention et comme illustré à la courbe 5, on dispose d'un équipement de post-traitement des NOx en amont du filtre à particules, la calibration standard (optimale NOx) étant à nouveau utilisée pour le début du cycle (de (de 0 à 800s) car l'efficacité de conversion NOx est plus faible, puis la nouvelle calibration - optimale CO₂ - sur la fin du cycle (de 800 à 1200s) car l'efficacité de conversion NOx est meilleure, on constate que l'efficacité de réduction des NOx par l'utilisation d'un carburant comportant un additif favorisant la combustion des suies lors des régénérations du filtre à particules, et qui selon au moins un mode de fonctionnement du moteur, associé à une calibration minimisant les rejets de dioxyde de carbone par le moteur peut rester telle que malgré tout, le niveau d'émission réglementaire est respecté. Dans ces conditions, un bénéfice CO₂ significatif est obtenu. Le gain moyen sur l'ensemble du cycle se situe autour de 4 à 5%, soit selon le véhicule considéré un gain de 5 à 8g de CO₂ par km.

Dans l'exemple qui précède, la calibration optimisée CO₂ est mise en oeuvre après 800s. De façon plus générale, la calibration optimisée selon l'invention sera mise en oeuvre selon un seuil prédéfini correspondant à un état d'efficacité donné des moyens de post-traitement, cet état pouvant de façon connue être estimé à partir de modèles basés par exemple sur des essais moteurs, modèles qui avantageusement, pourront également tenir compte du vieillissement de ces moyens.

## Revendications

1. Procédé de contrôle des émissions de polluants par un moteur à combustion comportant au moins un piston dont le déplacement en translation délimite une chambre de combustion, ledit moteur étant associé à une ligne d'échappement comportant, dans le sens d'écoulement des gaz d'échappement, un catalyseur d'oxydation, un catalyseur de réduction des NOx et un filtre à particules, et utilisant un carburant comportant un additif favorisant la combustion des suies lors des régénérations du filtre à particules, et qui selon au moins un mode de fonctionnement du moteur, est injecté conformément à une calibration mise en oeuvre selon un seuil prédéfini correspondant à un état d'efficacité donné des moyens de post-traitement, **caractérisé en ce que** cette calibration minimise les rejets de dioxyde de carbone par le moteur en procédant à une injection principale de carburant débutant entre 20° et 0° vilebrequin avant le point mort haut, quel que soit le couple régime, pression moyenne effective du moteur.

2. Procédé la revendication précédente, **caractérisé en ce que** l'injection principale est précédée d'une injection pilote.

3. Procédé selon la revendication précédente, **caractérisé en ce que** ladite injection pilote est opérée entre 2 et 10° vilebrequin avant l'injection principale

4. Procédé selon l'une des revendications précédentes, **caractérisé en ce que** l'injection de carburant est opérée avec un mélange dont la richesse est comprise entre 0,6 et 0,8.

5. Procédé selon l'une des revendications précédentes, **caractérisé en ce que** le mode de fonctionnement du moteur minimisant les rejets de dioxyde de carbone est mis en oeuvre dès que les moyens de réduction des NOx sont actifs.

6. Procédé selon l'une des revendications précédentes, **caractérisé en ce que** la réduction catalytique des NOx est obtenue à l'aide d'un réducteur injecté dans la ligne d'échappement en amont du catalyseur de réduction des NOx.

7. Procédé selon l'une des revendications précédentes, **caractérisé en ce que** le catalyseur de réduction des NOx et le filtre à particules sont accolés.

8. Procédé selon l'une des revendications précédentes, **caractérisé en ce que** le catalyseur d'oxydation est imprégné de platine et de palladium.

9. Procédé selon la revendication précédente, **caractérisé en ce que** le rapport molaire platine/palladium est de 2 pour 1.

## Patentansprüche

1. Verfahren zur Kontrolle der Schadstoffemissionen durch einen Verbrennungsmotor, zumindest einen Kolben umfassend, dessen translatorische Bewegung eine Brennkammer eingrenzt, wobei der besagte Motor mit einer Abgasleitung verbunden ist, die in der Strömungsrichtung der Abgase einen Oxidationskatalysator, einen Katalysator zur Reduktion der NOx und einen Partikelfilter umfasst, und einen Kraftstoff verwendet, der ein Additiv umfasst, das bei den Regenerationen der Partikelfilter die Verbrennung von Ruß fördert, und das je nach zumindest einem Betriebsmodus des Motors entsprechend einer Kalibrierung eingespritzt wird, die gemäß einem vorbestimmten Grenzwert entsprechend einem gegebenen Wirksamkeitszustand der Nachbehandlungsmittel angewandt wird, **dadurch gekennzeichnet, dass** diese Kalibrierung die Kohlendioxidemissionen durch den Motor durch die Vornahme einer Kraftstoff-Haupteinspritzung minimiert, die unabhängig vom Paar Drehzahl, mittlerer Wirkdruck des Motors zwischen 20° und 0° Kurbelwinkel vor dem oberen Totpunkt beginnt.

2. Verfahren nach dem vorherigen Anspruch, **dadurch gekennzeichnet, dass** der Haupteinspritzung eine Piloteinspritzung vorangeht.

3. Verfahren nach dem vorherigen Anspruch, **dadurch gekennzeichnet, dass** die besagte Piloteinspritzung zwischen 2° und 10° Kurbelwinkel vor der Haupteinspritzung vorgenommen wird.

4. Verfahren nach einem der vorherigen Ansprüche, **dadurch gekennzeichnet, dass** die Kraftstoffeinspritzung mit einer Mischung vorgenommen wird, deren Anreicherung zwischen 0,6 und 0,8 enthalten ist.

5. Verfahren nach einem der vorherigen Ansprüche, **dadurch gekennzeichnet, dass** der Betriebsmodus des Motors zur Minimierung der Kohlendioxidemissionen angewandt wird, sobald die Mittel zur Reduktion der NOx aktiv sind.

6. Verfahren nach einem der vorherigen Ansprüche, **dadurch gekennzeichnet, dass** man die katalytische Reduktion der NOx mithilfe eines Reduziermittels erzielt, das vor dem Katalysator zur Reduktion der NOx in die Abgasleitung eingespritzt wird.

7. Verfahren nach einem der vorherigen Ansprüche, **dadurch gekennzeichnet, dass** der Katalysator zur Reduktion der NOx und der Partikelfilter aneinandergefügt sind.

8. Verfahren nach einem der vorherigen Ansprüche, **dadurch gekennzeichnet, dass** der Oxidationskatalysator mit Platin und Palladium imprägniert ist.

9. Verfahren nach dem vorherigen Anspruch, **dadurch gekennzeichnet, dass** das Mol-Verhältnis zwischen Platin und Palladium 2 zu 1 beträgt.

## Claims

1. Method for controlling emissions of pollutants by a combustion engine comprising at least one piston, the translation movement of which delimits a combustion chamber, said engine being associated with an exhaust line comprising, in the direction of flow of the exhaust gases, an oxidation catalyst, a catalyst for reducing NOx and a particle filter, and using a fuel comprising an additive assisting the combustion of soot during regenerations of the particle filter, and which, according to at least one operating mode of the engine, is injected in accordance with a calibration implemented according to a predefined threshold corresponding to a given efficiency state of the post-treatment means, **characterised in that** this calibration minimises the discharges of carbon dioxide by the engine by proceeding with a main injection of fuel beginning at between 20° and 0° of the crankshaft before top dead centre, whatever the pair consisting of engine speed and effective mean pressure of the engine.

2. Method according to the preceding claim, **characterised in that** the main injection is preceded by a pilot injection.

3. Method according to the preceding claim, **characterised in that** said pilot injection is carried out at between 2° and 10° of the crankshaft before the main injection.

4. Method according to one of the preceding claims, **characterised in that** the injection of fuel is carried out with a mixture the richness of which is between 0.6 and 0.8.

5. Method according to one of the preceding claim, **characterised in that** the operating mode of the engine minimising the discharges of carbon dioxide is implemented as soon as the means for reducing NOx are active.

6. Method according to one of the preceding claims, **characterised in that** the catalytic reduction of NOx is obtained by means of a reducing agent injected into the exhaust line upstream of the NOx reduction catalyst.

7. Method according to one of the preceding claims, **characterised in that** the NOx reduction catalyst and the particle filter are contiguous.

8. Method according to one of the preceding claims, **characterised in that** the oxidation catalyst is impregnated with platinum and palladium.

9. Method according the preceding claim, **characterised in that** the platinum/palladium molar ratio is 2 for 1.
